# EUROPEAN PATENT SPECIFICATION

(11) **EP 4 541 701 B1**
(45) Date of publication and mention of the grant of the patent: **28.10.2026**
(21) Application number: 23383062.9
(22) Date of filing: 18.10.2023
(51) Int. Cl.: B62J 9/23, B62J 9/27, B62J 9/30

(54) **CASE FOR MOTORBIKES**
KOFFER FÜR MOTORRÄDER
COFFRE POUR MOTOCYCLETTES

(43) Date of publication of application: 23.04.2025
(73) Proprietor: Nad, S.L., 08100 Mollet del Valles (Barcelona) (ES)
(72) Inventor: DOMENECH FONTANALS, Jordi, 08100 MOLLET DEL VALLES (Barcelona) (ES); AYALA GONZALEZ, Pere, 08100 MOLLET DEL VALLES (Barcelona) (ES); XICOLA SERRANO, Jaume, 08100 MOLLET DEL VALLES (Barcelona) (ES)
(74) Representative: Herrero & Asociados, S.L.

(56) References cited:
- EP-A1- 2 033 883
- EP-A1- 4 183 669
- DE-A1- 102018 007 532

## Description

### Object of the invention

The present invention relates to a case for motorbikes, comprising a release and locking system for mounting the case to a motorbike, which allows it to be mounted on one side or the other of the case using the same components .

### Background to the invention

It is very common to use cases on motorbikes to store the user's belongings, e.g. the helmet.

These cases are fitted to the rear of the motorbike or to the side of the motorbike and comprise a base fitted with a lid, which can be locked onto the base by means of a key lock to prevent unintended opening of the case by an unauthorized user.

In addition, these case for motorbikes include a release and locking system so that the case can be locked to the motorbike, or released so that it can be easily mounted on or removed from the motorbike.

Depending on which side of the motorbike the case is to be mounted on, the release and locking system must be mounted on one side of the case or the other, so it is common for at least some of the components of the release and locking system to be different, with the economic cost that this entails.

EP2033883A1 discloses a case assembly for a motor cycle. In particular, the case assembly comprises at least a case to be transported by a motor cycle and a fixing structure adapted to be alternatively fixed to and removed from the main frame of said motor cycle so as to transport or support said case or bag.

DE102018007532A1, which shows all the features of the preamble of independent claim 1, discloses a transport device, in particular a motorcycle case, for fastening to a vehicle frame element with at least two parallel struts, wherein the transport device has a luggage receiving area, at least one side part, two first holding elements fastened to the side part, each having at least one recess for at least partially receiving the upper strut, wherein the first holding elements are rigidly fastened to the side part, two second holding elements fastened to the side part, each having at least one recess for at least partially receiving the lower strut, wherein the second holding elements are rigidly fastened to the side part, and a locking device which can be actuated via a locking and unlocking lever for locking the transport device to the vehicle frame element.

EP4183669A1 discloses a bag for motorcycles comprising at least one closing element for closing the bag and a plate that includes at least one housing for housing said at least one closing element, and at least one stop element that is movable between a releasing position and a retaining position.

### Description of the invention

Therefore, an objective of the present invention is to provide a case for motorbikes, comprising a release and locking system for mounting the case to a motorbike, which allows it to be mounted on one side or the other of the motorbike using the same components.

The case for motorbikes of the invention solves the above-mentioned disadvantages and has other advantages which will be described below.

The case for motorbikes according to the present invention is described in claim 1, and the dependent claims include additional features that are optional.

In particular, the case for motorbikes comprises:
a release and locking system for releasing or locking the case to a motorbike the release and locking system comprising a lever, at least one projection and at least one stop, the at least one projection and the at least one stop being complementary to each other, and the lever, the at least one projection and the at least one stop being movable between a release position, in which the case is allowed to be removed from the motorbike, and a lock position, in which the case is locked to the motorbike,
wherein the release and locking system also comprises a transmission plate on which the at least one stop is mounted, the transmission plate transmitting the movement between the lever and the at least one stop, the transmission plate and/or the at least one stop being able to be positioned in a first orientation or in a second orientation, depending on the side of the case where the lever is to be installed.

In this way, only by flipping the transmission plate and/or the at least one stop it is possible to use the same components for a first orientation, or right orientation, and a second orientation, or left orientation, of the release and locking system, depending on the side where the case is to be installed on the motorbike. Furthermore, it gives the freedom to achieve any configuration of the case by changing the position of a lock and/or lever, depending on the needs of the user or the motorbike manufacturer.

According to a preferred embodiment, the transmission plate is connected to the lever by means of a connecting rod, which can rotate with respect to the transmission plate and with respect to the lever.

In addition, the transmission plate comprises elongated through holes, in which guides of a gearbox are housed.

Advantageously, the transmission plate comprises a protruding portion, and at least one of the elongated through holes is arranged in the protruding portion.

Furthermore, the connecting rod is preferably connected to the transmission plate at the protruding portion.

According to a preferred embodiment, the transmission plate has a rectangular profile, defining long sides and short sides, with the protruding portion protruding from one of the long sides and one of the short sides.

### Brief description of the drawings

For a better understanding of what has been explained above, some drawings are included in which, schematically and only by way of a non-limiting example, a practical case of embodiment is represented.
Figure 1 is a perspective view of the case for motorbikes according to the present invention;
Figure 2 is a perspective front view of the case release and locking system according to the present invention, in its locked position, in its left-hand configuration;
Figure 3 is a perspective front view of the case release and locking system according to the present invention, in its released position;
Figure 4 is a perspective rear view of the release and locking system in its locked position, in its left-hand configuration;
Figure 5 is a perspective rear view of the release and locking system in its released position, in its left-hand configuration;
Figure 6 is a perspective rear view of the release and locking system in its locked position, in its right-hand configuration; and

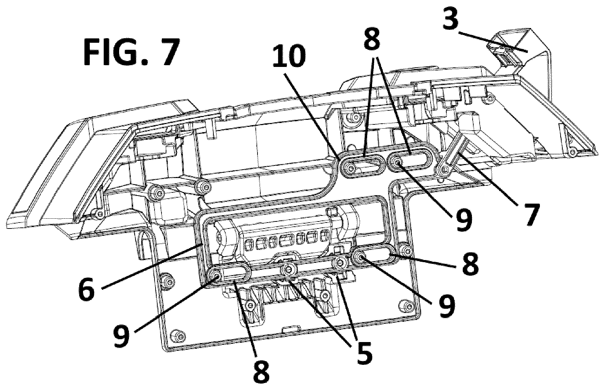

Figure 7 is a perspective rear view of the release and locking system in its released position, in its right-hand configuration.

### Description of a preferred embodiment

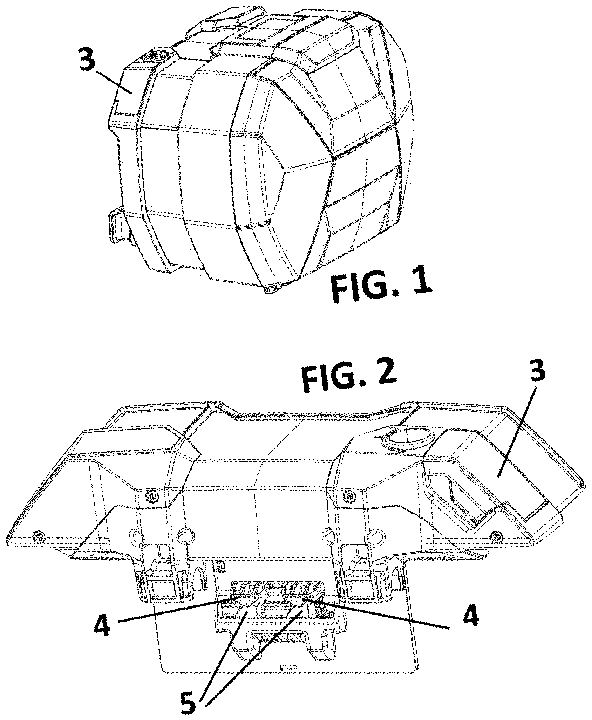

Figure 1 shows the case for motorbikes according to the present invention.

To enable the removal of the case from a motorbike or to lock the case on a motorbike, the case for motorbikes according to the present invention comprises a release and locking system.

This release and locking system comprises an actuating lever 3, which can be placed in any position of the case in a mechanism box 11.

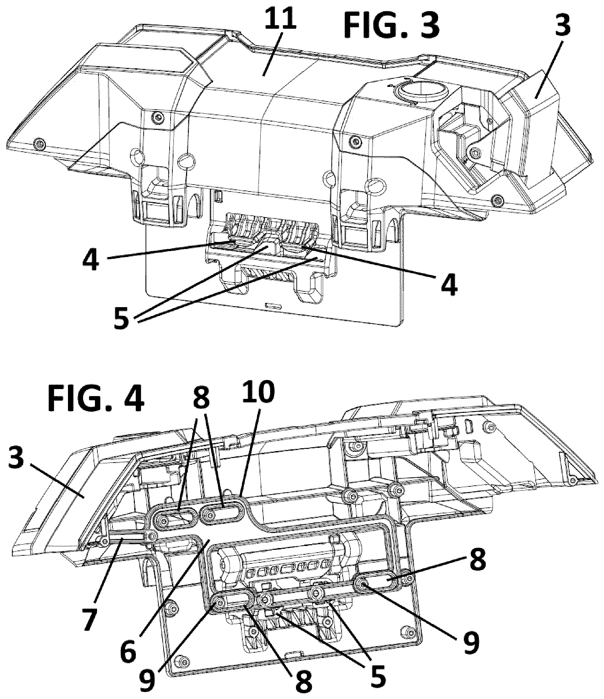

The actuating lever 3 is connected to protrusions 4, so that the actuation of the lever 3 causes the rotational displacement of the protrusions 4, as shown in figures 2 and 3.

In addition, said projections 4 are complemented by stops 5, said stops 5 being movable between a release position, in which removal of the case from a motorbike is permitted, and a locking position, in which the stops 5 block the rotational displacement of the projections 4, locking the case to a motorbike, preventing its removal.

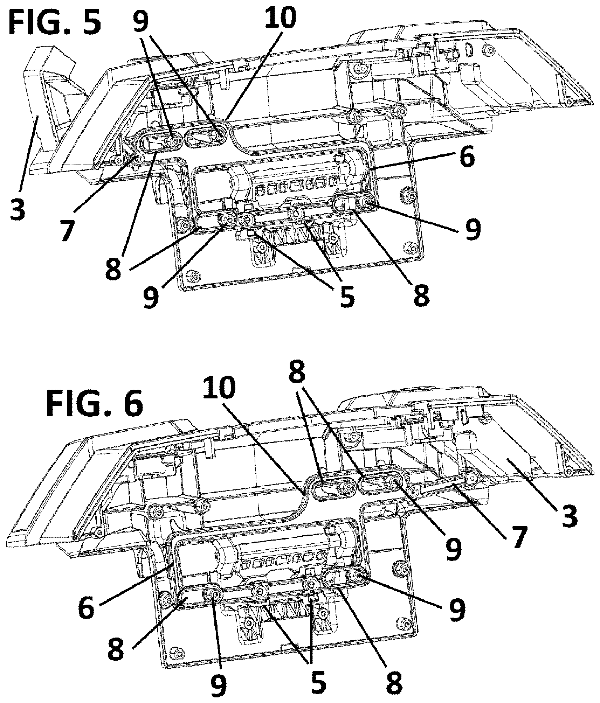

These stops 5 are movable from the release position, shown in figures 3 and 5, to the locking position, shown in figures 2 and 4, or vice versa.

The release and locking system also comprises a transmission plate 6 which is always the same, i.e. it is used in the right-hand configuration and in the left-hand configuration by simply flipping them over.

In addition, the stops 5, a connecting rod 7 and the gearbox 11 are also always the same in the left and right-hand configuration.

This transmission plate 6 transmits the movement from the actuating lever 3 to the stops 5. For this purpose, the transmission plate 6 is connected to the actuating lever 3 by means of the connecting rod 7, which is rotatable with respect to the transmission plate 6 and with respect to the actuating lever 3.

The transmission plate 6 is fitted with the stops 5, and the transmission plate 6 has elongated through holes 8 in which guides 9 are fitted, which are attached to the mechanism box 11 of the case.

At least one of said elongated through holes 8 is arranged in a protruding portion 10 of the transmission plate 6, which protrudes from the rest of the transmission plate 6.

According to the embodiment shown, the transmission plate 6 has a substantially rectangular profile, defining long sides and short sides, with the protruding portion 10 protruding from one of the long sides and one of the short sides.

Furthermore, the connecting rod 7 is attached to the transmission plate 6 at this protruding portion 10, in particular, at its end furthest from the rest of the transmission plate 6.

The operation of the case for motorbikes according to the present invention is as follows. When a user wishes to remove the case for motorbikes from a motorbike, he/she simply operates the actuating lever 3, which allows the case to be removed. When the actuating lever 3 is actuated and its position is changed, the transmission plate 6 moves from one position to the other, e.g. from its release position to its locking position, or vice versa, via the connecting rod 7.

With this displacement, the transmission plate 6 also moves the stops 5 along the elongated through holes 8 of the transmission plate 6.

Although reference has been made to a specific embodiment of the invention, it is obvious to a person skilled in the art that the case for motorbikes described is susceptible to numerous variations and modifications without departing from the scope of protection defined by the appended claims.

## Claims

1. Case for motorbikes, comprising:
a release and locking system for releasing or locking the case to a motorbike, the release and locking system comprising a lever (3), at least one projection (4) and at least one stop (5), the at least one projection (4) and the at least one stop (5) being complementary to each other, and the lever (3), the at least one projection (4) and the at least one stop (5) being movable between a release position, in which removal of the case for motorbikes is permitted, and a locking position, in which removal of the case for motorbikes is blocked,
wherein the release and locking system also comprises a transmission plate (6) on which the at least one stop (5) is mounted, the transmission plate (6) transmitting the movement between the lever (3) and the at least one stop (5), the transmission plate (6) and/or the at least one stop (5) being able to be positioned in a first orientation or in a second orientation, depending on the side of the case where the lever (3) is to be installed,
the transmission plate (6) comprises elongated through holes (8), in which guides (9) are housed, **characterized in that**
the transmission plate (6) comprises a protruding portion (10), and
at least one of the elongated through holes (8) is arranged in the protruding portion (10).

2. Case for motorbikes according to claim 1, wherein the transmission plate (6) is connected to the lever (3) by means of a connecting rod (7), which can rotate with respect to the transmission plate (6) and with respect to the lever (3).

3. Case for motorbikes according to claims 1 and 2, wherein the connecting rod (7) is connected to the transmission plate (6) at the protruding portion (10).

4. Case for motorbikes according to claim 3, wherein the transmission plate (6) has a rectangular profile, defining long sides and short sides, the protruding portion (10) protruding from one of the long sides and one of the short sides.

## Patentansprüche

1. Koffer für Motorräder, umfassend:
ein Löse- und Arretierungssystem zum Lösen des Koffers von oder Arretieren des Koffers an einem Motorrad, wobei das Löse- und Arretierungssystem einen Hebel (3), mindestens eine Nase (4) und mindestens einen Anschlag (5) umfasst, wobei die mindestens eine Nase (4) und der mindestens eine Anschlag (5) komplementär zueinander ausgebildet sind und der Hebel (3), die mindestens eine Nase (4) und der mindestens eine Anschlag (5) zwischen einer gelösten Stellung, in welcher ein Abnehmen des Koffers für Motorräder ermöglicht ist, und einer Arretierungsstellung, in welcher ein Abnehmen des Koffers für Motorräder verhindert ist, verstellbar sind,
wobei das Löse- und Arretierungssystem des Weiteren eine Übertragungsplatte (6) umfasst, an welcher der mindestens eine Anschlag (5) gelagert ist, wobei mittels der Übertragungsplatte (6) eine Bewegung zwischen dem Hebel (3) und dem mindestens einen Anschlag (5) übertragbar ist, wobei die Übertragungsplatte (6) und/oder der mindestens eine Anschlag (5) in Abhängigkeit davon, auf welcher Seite des Koffers der Hebel (3) angebracht werden soll, in einer ersten Ausrichtung oder in einer zweiten Ausrichtung positionierbar sind, wobei die Übertragungsplatte (6) längliche Durchgangsöffnungen (8) umfasst, in welchen Führungseinrichtungen (9) aufgenommen sind,
**dadurch gekennzeichnet,**
**dass** die Übertragungsplatte (6) einen vorspringenden Abschnitt (10) umfasst und mindestens eine der länglichen Durchgangsöffnungen (8) in dem vorspringenden Abschnitt (10) angeordnet ist.

2. Koffer für Motorräder nach Anspruch 1, wobei die Übertragungsplatte (6) über eine gegenüber der Übertragungsplatte (6) und gegenüber dem Hebel (3) drehbare Verbindungsstange (7) mit dem Hebel (3) verbunden ist.

3. Koffer für Motorräder nach den Ansprüchen 1 und 2, wobei die Verbindungsstange (7) an dem vorspringenden Abschnitt (10) mit der Übertragungsplatte (6) verbunden ist.

4. Koffer für Motorräder nach Anspruch 3, wobei die Übertragungsplatte (6) ein lange Seiten und kurze Seiten definierendes rechtwinkliges Profil aufweist, wobei der vorspringende Abschnitt (10) von einer der langen Seiten und einer der kurzen Seiten vorspringt.

## Revendications

1. Coffre pour motocyclette, comprenant :
un système de déverrouillage et de verrouillage pour déverrouiller ou verrouiller le coffre sur une motocyclette, le système de déverrouillage et de verrouillage comprenant un levier (3), au moins une saillie (4) et au moins une butée (5), l'au moins une saillie (4) et l'au moins une butée (5) étant complémentaires l'une de l'autre, et le levier (3), l'au moins une saillie (4) et l'au moins une butée (5) étant mobiles entre une position de déverrouillage, dans laquelle le retrait du coffre pour motocyclette est autorisé, et une position de verrouillage, dans laquelle le retrait du coffre pour motocyclette est bloqué,
dans lequel le système de déverrouillage et de verrouillage comprend également une plaque de transmission (6) sur laquelle est montée l'au moins une butée (5), la plaque de transmission (6) transmettant le mouvement entre le levier (3) et l'au moins une butée (5), la plaque de transmission (6) et/ou l'au moins une butée (5) pouvant être positionnées dans une première orientation ou dans une deuxième orientation, selon le côté du coffre où le levier (3) doit être installé,
la plaque de transmission (6) comprend des trous traversants allongés (8), dans lesquels sont logés des guides (9), **caractérisé en ce que** la plaque de transmission (6) comprend une partie saillante (10), et
au moins l'un des trous traversants allongés (8) est agencé dans la partie saillante (10).

2. Coffre pour motocyclette selon la revendication 1, dans lequel la plaque de transmission (6) est reliée au levier (3) au moyen d'une tige de liaison (7), qui peut tourner par rapport à la plaque de transmission (6) et par rapport au levier (3).

3. Coffre pour motocyclette selon les revendications 1 et 2, dans lequel la tige de liaison (7) est reliée à la plaque de transmission (6) au niveau de la partie saillante (10).

4. Coffre pour motocyclette selon la revendication 3, dans lequel la plaque de transmission (6) présente un profil rectangulaire, définissant des côtés longs et des côtés courts, la partie saillante (10) faisant saillie à partir de l'un des côtés longs et de l'un des côtés courts.
